# EUROPÄISCHE PATENTSCHRIFT

(11) **EP 1 513 683 B1**
(45) Veröffentlichungstag und Bekanntmachung des Hinweises auf die Patenterteilung: **10.10.2007**
(21) Anmeldenummer: 03738004.5
(22) Anmeldetag: 06.06.2003
(51) Int. Cl.: B32B 27/32, B32B 27/34, A22C 13/00

(54) **MEHRSCHICHTIGE FLÄCHEN- ODER SCHLAUCHFÖRMIGE NAHRUNGSMITTELHÜLLE ODER -FOLIE**
MULTILAYER PLANAR OR TUBULAR FOOD CASING OR FILM
ENVELOPPE OU FEUILLE MULTICOUCHE, PLANIFORME OU TUBULAIRE, POUR DENREES ALIMENTAIRES

(30) Priorität: 20.06.2002 DE 10227580
(43) Veröffentlichungstag der Anmeldung: 16.03.2005
(60) Teilanmeldung: 07009172.3
(73) Patentinhaber: KUHNE ANLAGENBAU GmbH, D-53757 Sankt Augustin (DE)
(72) Erfinder: SCHIEF, Hermann-Josef, 53359 Rheinbach (DE); SCHIFFMANN, Jürgen, Michael, 53773 Hennef-Rott (DE)
(74) Vertreter: Kuhnen & Wacker
(86) Internationale Anmeldenummer: PCT/EP2003/005985
(87) Internationale Veröffentlichungsnummer: WO 2004/000026

(56) Entgegenhaltungen:
- EP-A- 0 530 538
- EP-A- 0 879 560
- EP-A- 0 981 963
- WO-A-01/90202
- US-A- 4 469 742
- US-A- 4 762 748
- US-A- 5 047 253
- US-A- 5 972 444
- US-B1- 6 291 041
- US-B1- 6 406 763

## Beschreibung

Die vorliegende Erfindung betrifft eine mehrschichtige flächen- oder schlauchförmige Nahrungsmittelhülle oder -folie für Lebensmittelverpackungen, wie beispielsweise Wursthüllen, Schrumpfbeutel oder dgl., nach dem Oberbegriff des Anspruchs 1 oder nach dem Oberbegriff des Anspruchs 2.

Aus der DE 32 12 343 A1 ist eine schlauchförmige Verpackungshülle aus zweilagigem Folienlaminat bekannt geworden.

Ferner ist eine mehrschichtige, schlauchförmige Verpackungshülle für pastöses Füllgut, insbesondere eine künstliche Wursthülle, auf Basis von Polyamid in der DE 40 17 046 A1 als auch in der EP 0 467 039 A2 diskutiert.

In der Praxis werden derartige Wursthüllen oder Kunstdarm zum Verpacken von Wurst oder pastösen Dingen eingesetzt. Das zu verpackende Produkt, wie beispielsweise eine Wurstmasse, wird in den Kunstdarm gefüllt, darin gebrüht, gekühlt und gelagert. Daraus ergeben sich Anforderungen, wie beispielsweise eine ausgeprägte Dimensionsstabilität über den gesamten Verarbeitungsprozeß oder ein ausreichender Schutz des Füllgutes vor äußeren Einflüssen, wie beispielsweise Sauerstoffzutritt, UV-Strahlung, Austrocknung oder dergleichen.

Die aus der Praxis bekannten klassischen Wursthüllen können grob in drei Typen unterteilt werden: Die klassische einschichtige Wursthülle aus Polyamid, deren wesentlicher Nachteil die fehlende Wasserdampfsperre ist. Die vielfach verwendete Wursthülle aus drei Schichten, welche von außen nach innen betrachtet Polyamid, Polyolefin, vorzugsweise Polyethylen, Polyamid enthalten. Die bei der einschichtigen Wursthülle fehlende Wasserdampfbarriere wird durch die mittlere Polyolefinschicht gebildet. Die innere Schicht aus Polyamid sorgt für eine ausreichende Bräthaftung und dafür, daß es zu keiner Ausfällung oder Absetzung von Gelee kommt. Dabei kann diese Polyamidschicht auch durch eine entsprechend vorbehandelte (Corona) PE-Schicht ersetzt werden, wobei dann die PE-Schicht modifiziert werden muß, um eine zufriedenstellende Verbindung mit dem PA einzugehen. In der jüngeren Zeit haben sich Wursthüllen mit fünf Schichten in der Praxis bewährt. Die von außen nach innen gezählten fünf Schichten enthalten PA, einen Haftvermittler, PE, einen Haftvermittler und zuletzt wieder PA. Dieser Aufbau entspricht vom Ansatz her der Wursthülle aus drei Schichten, weist jedoch jeweils zwischen PA und PE bzw. PE und PA eine separate Klebeschicht bzw. einen separaten Haftvermittler auf. Dadurch kann man die mittlere Polyolefin-Schicht in Bezug auf die verwendeten Rohstoffe oder Mischungen stärker variieren.

Ungeachtet dessen sind die mechanischen Eigenschaften, wie beispielsweise die maximale Schrumpfrate oder der erzielbare Überdehnungsfaktor, beispielsweise für ein uni- oder ein bi-direktionales Verstrecken, bei diesen aus der Praxis bekannten mehrschichtigen flächen- oder schlauchförmigen Nahrungsmittelhüllen oder -folien immer noch unzureichend. Nicht zuletzt sind die damit verfügbare Sauerstoffbarriere als auch die Wasserdampfsperre noch nicht ausreichend dicht ausgebildet.

Dementsprechend ist es Aufgabe der vorliegenden Erfindung - unter Vermeidung der vorstehenden Nachteile - eine gattungsgemäße mehrschichtige flächen- oder schlauchförmige Nahrungsmittelhülle oder -folie derart weiterzubilden, daß eine ausreichend dichte Sauerstoffbarriere bei einer zufriedenstellenden Schrumpfrate als auch einem akzeptablen Überdehnungsfaktor zur Verfügung gestellt werden kann.

Diese Aufgabe wird gelöst durch die Merkmale des Anspruchs 1.

Erfindungsgemäß wird hierbei eine mehrschichtige flächen- oder schlauchförmige Nahrungsmittelhülle oder -folie für Lebensmittelverpackungen, wie beispielsweise Wursthüllen oder dgl., vorgeschlagen, die sich erstmals durch folgende, von außen nach innen gezählte Schichtenaufbauten mit erstmalig wenigstens sechs, vorzugsweise wenigstens sieben Schichten auszeichnet:
a) die erste Schicht von außen enthält als Schichtbestandteil Polyamid, die zweite Schicht EVOH, die dritte Schicht einen Haftvermittler, die vierte Schicht ein Polyolefin, vorzugsweise Polyethylen, die fünfte Schicht einen Haftvermittler und die sechste Schicht von außen, die zugleich die innerste bzw. die dem zu verpackenden Lebensmittel zugewandte Schicht ist, als Schichtbestandteil ein Polyamid,
oder b) die erste Schicht von außen enthält als Schichtbestandteil Polyamid, die zweite Schicht EVOH, die dritte Schicht Polyamid, die vierte Schicht einen Haftvermittler, die fünfte Schicht ein Polyolefin, vorzugsweise Polyethylen, die sechste Schicht einen Haftvermittler und die siebte Schicht von außen, die zugleich die innerste bzw. die dem zu verpackenden Lebensmittel zugewandte Schicht ist, als Schichtbestandteil ein Polyamid,
oder c) die erste Schicht von außen enthält als Schichtbestandteil Polyamid, die zweite Schicht einen Haftvermittler, die dritte Schicht Polyamid, die vierte Schicht EVOH, die fünfte Schicht Polyamid, die sechste Schicht einen Haftvermittler und die siebte Schicht von außen, die zugleich die innerste bzw. die dem zu verpackenden Lebensmittel zugewandte Schicht ist, als Schichtbestandteil ein Polyamid.

Hierbei ergibt in vorteilhafter Weise EVOH die gewünschte Barriere. Das PA ermöglicht die Sicherstellung der gewünschten mechanischen Eigenschaften. Mit dem PE kann positiv auf die Siegelbarkeit eingewirkt werden. Ferner erhält man mit EVA einen hohen Schrumpf als auch eine weitere Beeinflußbarkeit der mechanischen Eigenschaften, wobei hierzu ergänzend eine Elektronenstrahl-Behandlung vorzusehen ist.

Dabei umfassen die Polyolefine sowohl PE als auch EVA im Sinne dieser Anmeldung sowie Mischungen von Polyolefinen als solchen als auch mit Ionomeren. Die Haftvermittler (kurz: HV) stehen für eine Klebeschicht. Unter EVOH soll sowohl EVOH als auch Mischungen von EVOH mit anderen Polymeren verstanden werden. Ferner steht PA allgemein für PA sowie für PA 6, PA 66, PA 6/66, PA 6/12 oder dergleichen als auch für Mischungen hiervon sowie für Mischungen von PA mit anderen Polymeren. Weiterhin steht EVA gleichsam für EVA als auch für Mischungen von EVA mit Polymeren.

Damit wird in vorteilhafter Weise eine Nahrungsmittelhülle oder -folie für Lebensmittelverpackungen, insbesondere für Wursthüllen oder dgl. geschaffen, mit der ein gezielter Schrumpf von wenigstens 10 bis 20 %, vorzugsweise von wenigstens 12 bis 15 %, problemlos möglich ist.

Speziell bei Schrumpfbeuteln oder dgl. ist mit den erstmalig vorgeschlagenen Schichtaufbauten in vorteilhafter Weise ein besonders hoher Schrumpf erzielbar, der wenigstens 20 bis 60 %, vorzugsweise wenigstens 30 bis 50 %, bei einer Wassertemperatur von um 95°C beträgt.

Der zugleich damit verfügbare Überdehnungsfaktor liegt bei Wursthüllen wie bei Schrumpfbeuteln wenigstens 5 bis 15 %, vorzugsweise bei 10 bis 12 %.

Für die bei Schrumpfbeuteln vorzusehenden Siegelschichten auf der Innen- und/oder Außenseite kann bei den erstmalig vorgeschlagenen Schichtaufbauten vorteilhaft als Rohstoff beispielsweise ein Polyolefin, vorzugsweise PE, LLDPE, EVA oder Ionomere oder Mischungen hiervon oder dergleichen vorgesehen werden.

Die erfindungsgemäße Nahrungsmittelhülle oder -folie eignet sich u. a. besonders gut als Wursthülle, da deren innerste Schicht bei den hierfür erstmals vorgeschlagenen Schichtaufbauten eine besonders gute Bräthaftung zur Wurstmasse aufweist.

Aufgrund der durch den Schichtbestandteil EVOH erzielten, besonders ausgeprägten Sauerstoffbarriere ist eine hervorragende Haltbarkeit der damit verpackten Lebensmittel, insbesondere einer in der Wursthülle befindlichen Wurstmasse über mehr als sechs Wochen ohne jegliche Qualitätsminderung gewährleistet.

Dank der extrem gut ausgebildeten Sauerstoffbarriere steht mit der erfindungsgemäßen Nahrungsmittelhülle oder -folie erstmals eine Lebensmittelverpackung zur Verfügung, mit der auch besonders luftempfindliche Güter selbst bei langen Lagerzeiten beispielsweise keiner farblichen Veränderung unterzogen sind oder gar Gefahr laufen, durch Eintritt von Sauerstoff zu altern oder ihren Geschmack zu verändern.

So wird der Schichtbestandteil EVOH bei einem bevorzugten Schichtaufbau ähnlich einem Sandwich zwischen zwei Schichten mit Polyamid als Schichtbestandteil eingebettet, was zu einer möglichst hohen Sauerstoffbarriere führt und zugleich eine hervorragende Einbettung und Stabilisierung der EVOH-Schicht zwischen die beiden Polyamid-Schichten als Trägerschichten gewährleistet.

Zugleich steht eine hervorragende Wasserdampfbarriere zur Verfügung, was insbesondere bei Wurst oder anderen Lebensmitteln, die frischhaltebedürftig sind, entscheidend ist. Mit der erfindungsgemäßen Nahrungsmittelhülle oder -folie verpackte Lebensmittel bleiben deshalb besonders lange frisch.

Aufgrund der niedrigen Wasserdampfdurchlässigkeit bleiben die Gewichtsverluste beim Lagern der Lebensmittel und insbesondere beim Lagern von Wurst besonders gering. Gerade Wurst zeigt mit der erfindungsgemäßen Wursthülle verpackt auch nach langer Lagerung eine faltenfreie, eng anliegende Hülle. Dabei entstehen zwischen der Wurstmasse und der innersten Schicht der Wursthülle aufgrund der besonders guten Bräthaftung keinerlei Zwischenräume in denen sich Gelee aus der Wurstmasse absetzen könnte.

Ferner eignet sich die erfindungsgemäße Nahrungsmittelhülle oder -folie als Schrumpffolie und kann beim Verkleben auch gut gesiegelt werden. Sofern die erfindungsgemäße Nahrungsmittelhülle oder - folie als Wursthülle eingesetzt wird, ist ebenso ein reines Kleben problemlos möglich.

Die äußerste Schicht der erstmalig vorgeschlagenen Nahrungsmittelhülle oder-folie ist besonders gut beschrift- oder bedruckbar.

Darüber hinaus läßt sich die erfindungsgemäße Nahrungsmittelhülle oder - folie besonders gut mit entsprechenden Anlagen der selben Anmelderin herstellen und weiter verarbeiten.

Vorteilhafte Weiterbildungen der Erfindung ergeben sich aus den Merkmalen der Unteransprüche.

So ist es bei einer bevorzugten Ausführungsform der erfindungsgemäßen Nahrungsmittelhülle oder -folie für Lebensmittelverpackungen vorgesehen, daß Schichten, die Polypropylen oder Polyolefin als Schichtbestandteil enthalten, alternativ auch Polypropylen, EVA (Ethyl-Vinyl-Alkohol), EM(M)A, Ionomere oder Mischungen von diesen oder dgl. enthalten.

Weiterhin ist in einer bevorzugten Ausführungsform vorgesehen, daß Schichten, die einen Haftvermittler enthalten, einen Haftvermittler aufweisen, der auf PE, EVA, EM(M)A oder einem Ionomer als Grundstoff basiert.

Gemäß einer weiter bevorzugten Ausführungsform ist vorgesehen, daß Schichten, die einen Haftvermittler als Bestandteil aufweisen, alternativ ein Gemisch aus Polyolefin und Haftvermittler oder ein Gemisch aus EVA und/oder EM(M)A und Haftvermittler enthalten.

Entsprechend einer weiter bevorzugten Ausführungsform ist vorgesehen, daß Schichten, die EVOH als Schichtbestandteil aufweisen, alternativ MXD6 (modifziertes Polyamid 6) enthalten.

Gemäß einer weiter bevorzugten Ausführungsform der erfindungsgemäßen Nahrungsmittelhülle oder -folie ist vorgesehen, daß Schichten, die Polyamid als Schichtbestandteil aufweisen, alternativ einen Ionomer enthalten.

Ferner ist gemäß einer bevorzugten Ausführungsform vorgesehen, daß Schichten, die Polyamid als Schichtbestandteil aufweisen, alternativ MXD6 enthalten.

Nicht zuletzt ist gemäß einer bevorzugten Ausführungsform vorgesehen, daß Schichten, die Polyamid als Schichtbestandteil aufweisen, Polycaprolactam (PA 6), Polyhexamethylenadipinamid (PA 66), PA 6/66, PA 11, PA 12 oder Mischungen aus diesen Polyamiden oder dgl. enthalten.

Mit der vorliegenden Erfindung wird damit erstmals eine flächen- oder schlauchförmige Nahrungsmittelhülle oder - folie mit einem wenigstens sechsschichtigen, vorzugsweise wenigstens siebenschichtigen, Schichtaufbau vorgeschlagen.

## Patentansprüche

1. Mehrschichtige schlauchförmige Nahrungsmittelhülle oder -folie für Wursthüllen, **gekennzeichnet durch** folgende, von außen nach innen gezählte Schichtenaufbauten, mit wenigstens sechs, vorzugsweise wenigstens sieben, Schichten: a)
- die erste Schicht von außen enthält als Schichtbestandteil Polyamid,
- die zweite Schicht von außen enthält als Schichtbestandteil EVOH,
- die dritte Schicht von außen enthält als Schichtbestandteil einen Haftvermittler,
- die vierte Schicht von außen enthält als Schichtbestandteil ein Polyolefin, vorzugsweise Polyethylen,
- die fünfte Schicht von außen enthält als Schichtbestandteil einen Haftvermittler, und
- die sechste Schicht von außen enthält als Schichtbestandteil Polyamid, oder b)
- die erste Schicht von außen enthält als Schichtbestandteil Polyamid,
- die zweite Schicht von außen enthält als Schichtbestandteil EVOH,
- die dritte Schicht von außen enthält als Schichtbestandteil Polyamid,
- die vierte Schicht von außen enthält als Schichtbestandteil einen Haftvermittler,
- die fünfte Schicht von außen enthält als Schichtbestandteil ein Polyolefin, vorzugsweise Polyethylen,
- die sechste Schicht von außen enthält als Schichtbestandteil einen Haftvermittler, und
- die siebte Schicht von außen enthält als Schichtbestandteil Polyamid, oder c)
- die erste Schicht von außen enthält als Schichtbestandteil Polyamid,
- die zweite Schicht von außen enthält als Schichtbestandteil einen Haftvermittler,
- die dritte Schicht von außen enthält als Schichtbestandteil Polyamid,
- die vierte Schicht von außen enthält als Schichtbestandteil EVOH,
- die fünfte Schicht von außen enthält als Schichtbestandteil Polyamid,
- die sechste Schicht von außen enthält als Schichtbestandteil einen Haftvermittler, und
- die siebte Schicht von außen enthält als Schichtbestandteil Polyamid.

2. Nahrungsmittelhülle oder -folie für Lebensmittelverpackungen nach Anspruch 1, **dadurch gekennzeichnet, daß** Schichten, die ein Polyolefin, vorzugsweise Polypropylen, als Schichtbestandteil enthalten, alternativ auch weitere Polyolefine, Polypropylen, EVA (Ethyl-Vinyl-Alkohol), EM(M)A, Ionomere oder Mischungen von diesen enthalten.

3. Nahrungsmittelhülle oder -folie für Lebensmittelverpackungen nach einem der Ansprüche 1 oder 2, **dadurch gekennzeichnet, daß** Schichten, die einen Haftvermittler enthalten, einen Haftvermittler aufweisen, der auf PE, EVA, EM(M)A oder einem Ionomer als Grundstoff basiert.

4. Nahrungsmittelhülle oder -folie für Lebensmittelverpackungen nach einem der Ansprüche 1 bis 3, **dadurch gekennzeichnet, daß** Schichten, die einen Haftvermittler als Bestandteil aufweisen alternativ ein Gemisch aus Polyolefin und Haftvermittler oder ein Gemisch aus EVA und/oder EM(M)A und Haftvermittler enthalten.

5. Nahrungsmittelhülle oder -folie für Lebensmittelverpackungen nach einem der Ansprüche 1 bis 4, **dadurch gekennzeichnet, daß** Schichten, die Polyamid als Schichtbestandteil aufweisen alternativ MXD6 enthalten.

6. Nahrungsmittelhülle oder -folie für Lebensmittelverpackungen nach einem der Ansprüche 1 bis 5, **dadurch gekennzeichnet, daß** Schichten, die Polyamid als Schichtbestandteil aufweisen, Polycaprolactam (PA 6), Polyhexamethylenadipinamid (PA 66), PA 6/66, PA 11, PA 12 oder Mischungen aus diesen Polyamiden enthalten.

## Claims

1. Multilayered tubular food package casing or film for sausage casings, **characterized by** the following lamination structure with at least six, preferably at least seven layers, in order from outside to inside:
a)
- the first layer layer, in order from outside to inside, comprising polyamide as a layer constituent;
- the second layer, in order from outside to inside, comprising EVOH as a layer constituent;
- the third layer, in order from outside to inside, comprising an adhesion agent as a layer constituent;
- the fourth layer, in order from outside to inside, comprising a polyolefin as a layer constituent, preferably polyethylene;
- the fifth layer, in order from outside to inside, comprising an adhesion agent as a layer constituent; and
- the sixth layer, in order from outside to inside, comprising polyamide as a layer constituent;
or b)
- the first layer, in order from outside to inside, comprising polyamide as a layer constituent;
- the second layer, in order from outside to inside, comprising EVOH as a layer constituent;
- the third layer, in order from outside to inside, comprising polyamide as a layer constituent;
- the fourth layer, in order from outside to inside, comprising an adhesion agent as a layer constituent;
- the fifth layer, in order from outside to inside, comprising a polyolefin as a layer constituent, preferably polyethylene;
- the sixth layer, in order from outside to inside, comprising an adhesion agent as a layer constituent; and
- the seventh layer, in order from outside to inside, comprising polyamide as a layer constituent;
or c)
- the first layer, in order from outside to inside, comprising polyamide as a layer constituent;
- the second layer, in order from outside to inside, comprising an adhesion agent as a layer constituent;
- the third layer, in order from outside to inside, comprising polyamide as a layer constituent;
- the fourth layer, in order from outside to inside, comprising EVOH as a layer constituent;
- the fifth layer, in order from outside to inside, comprising polyamide as a layer constituent;
- the sixth layer, in order from outside to inside, comprising an adhesion agent as a layer constituent; and
- the seventh layer, in order from outside to inside, comprising polyamide as a layer constituent.

2. Food package casing or film for foodstuff packages according to claim 1, **characterized in that** said layers comprising a polyolefin, preferably polypropylene, as a layer constituent, alternatively comprise additional polyolefins, polypropylene, EVA (ethyl vinyl alcohol) EM(M)A, ionomers and mixtures thereof.

3. Food package casing or film for foodstuff packages according to claim 1 or 2, **characterized in that** said layers comprising an adhesion agent comprise an adhesion agent on the basis of PE, EVA, EM(M)A or a ionomer as basic component.

4. Food package casing or film for foodstuff packages according to any one of claims 1 to 3, **characterized in that** said layers comprising an adhesion agent as a layer constituent alternatively comprise a mixture of polyolefin and adhesion agent or a mixture of EVA and/or EM(M)A and adhesion agent.

5. Food package casing or film for foodstuff packages according to any one of claims 1 to 4, **characterized in that** said layers having polyamide as a layer constituent alternatively comprise MXD6.

6. Food package casing or film for foodstuff packages according to any one of claims 1 to 5, **characterized in that** said layers comprising polyamide as a layer constituent, comprise polycaprolactam (PA 6), polyhexamethylene adipamide (PA 66), PA 6/66, PA 11, PA 12 or mixtures of these polyamides.

## Revendications

1. Enveloppe ou feuille multicouche, tubulaire, pour denrées alimentaires, pour enveloppe de saucisse, **caractérisée par** les structures suivantes des couches, énumérées de l'extérieur vers l'intérieur, avec au moins six, de préférence aux moins sept couches :
a)
- la première couche depuis l'extérieur contient un polyamide comme constituant de la couche,
- la deuxième couche depuis l'extérieur contient un EVOH comme constituant de la couche,
- la troisième couche depuis l'extérieur contient un agent adhésif comme constituant de la couche,
- la quatrième couche depuis l'extérieur contient une polyoléfine comme constituant de la couche, de préférence le polyéthylène,
- la cinquième couche depuis l'extérieur contient un agent adhésif comme constituant de la couche, et
- la sixième couche depuis l'extérieur contient un polyamide comme constituant de la couche,
ou b)
- la première couche depuis l'extérieur contient un polyamide comme constituant de la couche,
- la deuxième couche depuis l'extérieur contient un EVOH comme constituant de la couche,
- la troisième couche depuis l'extérieur contient un polyamide comme constituant de la couche,
- la quatrième couche depuis l'extérieur contient un agent adhésif comme constituant de la couche,
- la cinquième couche depuis l'extérieur contient une polyoléfine comme constituant de la couche, de préférence le polyéthylène,
- la sixième couche depuis l'extérieur contient un agent adhésif comme constituant de la couche, et
- la septième couche depuis l'extérieur contient un polyamide comme constituant de la couche,
ou c)
- la première couche depuis l'extérieur contient un polyamide comme constituant de la couche,
- la deuxième couche depuis l'extérieur contient un agent adhésif comme constituant de la couche,
- la troisième couche depuis l'extérieur contient un polyamide comme constituant de la couche,
- la quatrième couche depuis l'extérieur contient un EVOH comme constituant de la couche,
- la cinquième couche depuis l'extérieur contient un polyamide comme constituant de la couche,
- la sixième couche depuis l'extérieur contient un agent adhésif comme constituant de la couche, et
- la septième couche depuis l'extérieur contient un polyamide comme constituant de la couche.

2. Enveloppe ou feuille pour denrées alimentaires, pour l'emballage de vivres selon la revendication 1, **caractérisée en ce que** les couches, qui contiennent une polyoléfine, de préférence le polypropylène comme constituant de la couche, contiennent en variante, également une autre polyoléfine, le polypropylène, l'EVA (ethyl-vinylalcool), l'EM(M)A, un ionomère ou leurs mélanges.

3. Enveloppe ou feuille pour denrées alimentaires, pour l'emballage de vivres selon la revendication 1 ou 2, **caractérisée en ce que** les couches, qui contiennent un agent adhésif, présentent un agent adhésif qui est à base de PE, d'EVA, d'EM(M)A ou d'un ionomère comme matière première.

4. Enveloppe ou feuille pour denrées alimentaires, pour l'emballage de vivres selon l'une quelconque des revendications 1 à 3, **caractérisée en ce que** les couches, qui contiennent un agent adhésif comme constituant, contiennent en variante, un mélange de polyoléfine et d'agent adhésif ou un mélange d'EVA et/ou d' EM (M) A et d'agent adhésif.

5. Enveloppe ou feuille pour denrées alimentaires, pour l'emballage de vivres selon l'une quelconque des revendications 1 à 4, **caractérisée en ce que** les couches, qui présentent un polyamide comme constituant de la couche, contiennent en variante le MXD6.

6. Enveloppe ou feuille pour denrées alimentaires, pour l'emballage de vivres selon l'une quelconque des revendications 1 à 5, **caractérisée en ce que** les couches, qui présentent un polyamide comme constituant de la couche, contiennent la polycaprolactame (PA 6), le polyhexaméthylèneadipamide (PA 66), le PA6/66, le PA 11, le PA 12 ou des mélanges de ces polyamides.
